# EUROPEAN PATENT APPLICATION

(11) **EP 4 789 649 A1**
(43) Date of publication of application: **12.08.2026**
(21) Application number: 23955537.8
(22) Date of filing: 13.10.2023
(51) Int. Cl.: A61H 1/02, A61H 3/00, B25J 9/00, B25J 9/16, B25J 13/08, B25J 19/02

(54) **LOWER LIMB REHABILITATION TRAINING ROBOT SYSTEM AND CONTROL METHOD THEREFOR**

(30) Priority: 12.10.2023 KR 20230136252
(71) Applicant: Cosmo Robotics Co., Ltd, Seoul 08380 (KR)
(72) Inventor: OH, Joo Young, Seongnam-si Gyeonggi-do 13528 (KR)
(74) Representative: HGF
(86) International application number: PCT/KR2023/015793
(87) International publication number: WO 2025/079750

(57) **Abstract**

A lower limb rehabilitation training robot system serves to help a patient to do lower limb rehabilitation training by providing training modes for a plurality of motions related to activities of a lower limb. The lower limb rehabilitation training robot system may include an input/output device for selecting a training mode to perform among the plurality of training modes, an exoskeleton robot fastened to the lower limb to move the lower limb of the patient, and a controller to control the operation of the exoskeleton robot. The exoskeleton robot may include a hip joint portion, a knee joint portion and an ankle joint portion disposed to match a hip joint, a knee joint and an ankle joint of the patient. In this instance, the controller may be configured to control the rotation of the hip joint portion, the knee joint portion and the ankle joint portion of the exoskeleton robot in response to the selected training mode through the input/output device to assist the patient in moving the lower limb.

## Description

### [Technical Field]

The present disclosure relates to a lower limb rehabilitation training robot system and a control method thereof, and more particularly, to a lower limb rehabilitation training robot system and its control technology for lower limb rehabilitation including reconstruction of lower limb muscles and recovery of joint movements in patients or persons with disabilities.

### [Background Art]

A variety of rehabilitation training is conducted for the recovery of persons with disabilities such as lower limb motor impairments caused by cerebral palsy or stroke, or lower limb paralysis caused by accidents.

It is reported that the human brain possesses the ability of the central nervous system to change, and this ability is known as "neuroplasticity". This allows people to learn new skills or compensate for the loss of functions caused by trauma or diseases.

According to experts' reports, prolonged high-intensity training may affect neuroplasticity, and this effect is more efficient for younger patients. However, rehabilitation training requires patients' significant efforts, and many patients give up or struggle with the training due to the training intensity.

Accordingly, rehabilitation training robots are used to help restore and improve patients' physical functions through physical contact with the patients.

However, the existing rehabilitation training robots simply assist gait training like Patent Document 1.

The human lower limbs perform a variety of activities including walking, standing in place or sitting. The joints or muscles used for each lower limb motion differ.

Effective lower limb rehabilitation requires balanced reconstruction and recovery of the muscles and joints involved in all the lower limb activities.

The existing technology does not sufficiently meet the needs in the field of lower limb rehabilitation.

### [Disclosure]

### [Technical Problem]

The present disclosure provides a lower limb rehabilitation training robot system that provides training modes for a plurality of motions related to lower limb activities to contribute to the balanced reconstruction and recovery of muscles and joints involved in all lower limb activities, and a control method thereof.

### [Technical Solution]

A lower limb rehabilitation training robot system according to an aspect of the present disclosure helps a patient to do lower limb rehabilitation training by providing training modes for a plurality of motions related to activities of a lower limb, and includes an input/output device configured to allow a user or an assistant to select a training mode to perform among the plurality of training modes, an exoskeleton robot fastened to the lower limb of the patient to move the lower limb of the patient, and a controller configured to control the operation of the exoskeleton robot.

In this instance, the exoskeleton robot includes a hip joint portion, a knee joint portion and an ankle joint portion disposed to match a hip joint, a knee joint and an ankle joint of the patient. The controller is configured to control the rotation of the hip joint portion, the knee joint portion and the ankle joint portion of the exoskeleton robot in response to the selected training mode through the input/output device to assist the patient in moving the lower limb.

In an embodiment, the plurality of training modes include Stand up mode, Sit down mode, Walk forward mode, Walk in place mode and Climb/descend stairs mode.

When the Walk forward mode and the Walk in place mode are selected, the lower limb rehabilitation training robot system according to an embodiment is configured to select one of Step-by-step mode, Continuous mode and Active mode, the Step-by-step mode in which the motion is done once for each operation command entered by the patient or the assistant, the Continuous mode in which the motion continues until a stop command is entered by the patient or the assistant, and the Active mode in which the exoskeleton robot operates in response to a force applied by the patient to a preset sensitivity.

When the Walk in place mode is selected, the lower limb rehabilitation training robot system according to an embodiment is configured to select one of Both legs mode, Left leg mode and Right leg mode, the Both legs mode to cause the patient to make a walking-in-place motion by moving a left leg and a right leg in an alternating manner, the Left leg mode to cause the patient to make the walking-in-place motion on the left leg, and the Right leg mode to cause the patient to make the walking-in-place motion on the right leg.

In an embodiment, the exoskeleton robot further includes a hip joint module that is rotatable about the hip joint portion, a knee module coupled to the hip joint module movably closer to or away from the hip joint module, and an ankle module connected to the knee module such that the knee joint portion is rotatable around a rotation center axis, the ankle module coupled movably closer to or away from the knee module.

In an embodiment, the controller includes an input unit configured to receive selection information for any one of the plurality of training modes from the input/output device, a database configured to store parameter information corresponding to each of the plurality of training modes, the parameter information including at least one of an operating time, a pause, a step length, a step height or a stair height, a sensing unit configured to detect at least one of first distance information between the hip joint module and the knee module or second distance information between the knee module and the ankle module, and a control execution unit configured to generate a control command for controlling the rotation of at least one of the hip joint portion, the knee joint portion or the ankle joint portion of the exoskeleton robot based on the parameter information corresponding to the selected training mode by the selection information.

The control execution unit is further configured to calculate length information of the exoskeleton robot based on at least one of the first distance information or the second distance information, and determine a value of at least one of an upper limit or a lower limit of the operating time, the pause, the step length, the step height or the stair height of the parameter information based on the length information.

A control method of the lower limb rehabilitation training robot system according to an aspect of the present disclosure includes the steps of storing, by the controller, parameter information corresponding to each of a plurality of training modes related to activities of the lower limb in the lower limb rehabilitation training robot system, the parameter information including at least one of an operating time, a pause, a step length, a step height or a stair height, receiving, by the controller, selection information for any one of the plurality of training modes, and generating, by the controller, a control command for controlling the rotation of at least one of the hip joint portion, the knee joint portion or the ankle joint portion of the exoskeleton robot based on the parameter information corresponding to the selected training mode by the selection information.

In this instance, the step of generating the control command includes the step of determining, by the controller, a value of at least one of an upper limit or a lower limit of the operating time, the pause, the step length, the step height or the stair height of the parameter information based on length information of the exoskeleton robot.

In an embodiment, the step of generating the control command further includes the steps of detecting, by the controller, at least one of first distance information between the hip joint module and the knee module or second distance information between the knee module and the ankle module, and calculating, by the controller, the length information based on at least one of the first distance information or the second distance information.

### [Advantageous Effects]

The use of the lower limb rehabilitation training robot system according to an aspect of the present disclosure may achieve the balanced reconstruction and recovery of muscles and joints involved in all lower limb activities by using the training modes for the plurality of motions related to lower limb activities.

Furthermore, the lower limb rehabilitation training robot system according to an aspect of the present disclosure and its control method may achieve rehabilitation training for the user's body size by fine tuning the upper limit and/or the lower limit of motion parameters for the operation of the lower limb rehabilitation training robot system according to the length of the leg portion by increasing or reducing the length of the leg portion of the exoskeleton device to fit the user's body.

### [Brief Description of the Drawings]

FIG. 1 is a schematic diagram of a lower limb rehabilitation training robot system according to an embodiment.
FIG. 2 is a front view of an exoskeleton robot of a lower limb rehabilitation training robot system according to an embodiment.
FIG. 3 is a rear perspective view of the exoskeleton robot of the lower limb rehabilitation training robot system according to an embodiment.
FIG. 4 is a diagram illustrating distance adjustment of a knee module and an ankle module of the exoskeleton robot.
FIG. 5 is a conceptual diagram showing the range of motion of a leg portion of the exoskeleton robot.
FIG. 6 is a schematic block diagram of a controller of the lower limb rehabilitation training robot system according to an embodiment.
FIG. 7 is a flowchart showing each step of a control method of the lower limb rehabilitation training robot system according to an embodiment.

### [Mode for Invention]

Hereinafter, exemplary embodiments of the present disclosure will be described with reference to the accompanying drawings. Although the present disclosure is described with reference to the embodiments shown in the drawings, this is described as an embodiment, and the technical aspects of the present disclosure and key components and their operation are not limited thereto.

### [Lower limb rehabilitation training robot system (1)]

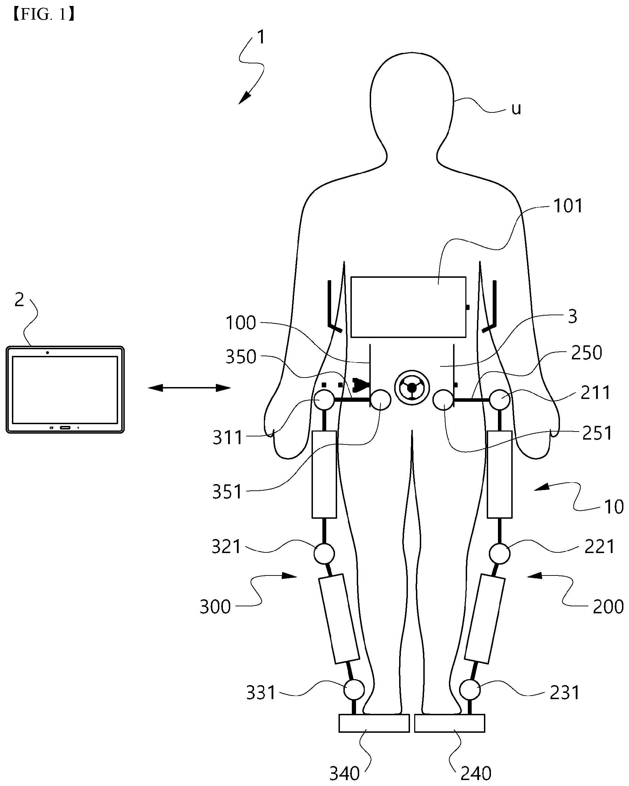

FIG. 1 is a schematic diagram of a lower limb rehabilitation training robot system (hereinafter simply referred to as 'robot system') 1 according to an embodiment.

The robot system 1 provides a patient (a user) U with training modes for a plurality of motions related to lower limb activities, for example, standing, walking or sitting motion to help the user U to do lower limb rehabilitation training.

Referring to FIG. 1, the robot system 1 includes an input/output device 2, an exoskeleton robot 10 that may be worn on the user U and attached to the lower limb of the user U, and a controller 3 to control the operation of the exoskeleton robot 10.

The input/output device 2 is a user interface device used for the user U or an assistant who assists the user U, for example, medical staff, to input commands for controlling the exoskeleton robot 10 and output various data to monitor the operation state of the exoskeleton robot 10.

The input/output device 2 according to this embodiment is shown as a touchscreen-based tablet PC, but is not limited thereto, and may include any other smart device including a smartphone or a dedicated interface device for the robot systems 1.

The input/output device 2 may transmit and receive signals to and from the controller 3 via wireless communication, for example, Bluetooth or wired communication.

The exoskeleton robot 10 includes a body portion 100, and a first leg portion 200 and a second leg portion 300 extending from the body portion 100. The body portion 100 is formed to approximately contact the back of the user U, and each of the first leg portion 200 and the second leg portion 300 extends along the corresponding leg of the user U from the outer part of the leg.

The first leg portion 200 of the exoskeleton robot 10 includes hip joint portions 211, 251, a knee joint portion 221 and an ankle joint portion 231 disposed to match the hip joint, the knee joint and the ankle joint of the user U.

Each of the hip joint portions 211, 251, the knee joint portion 221 and the ankle joint portion 231 includes a joint actuator to rotate a connected link (a module) at each joint portion.

The second leg portion 300 has a mirror symmetric structure to the first leg portion 200. The configuration of the second leg portion 300 is substantially the same as the configuration of the first leg portion 200, and hereinafter, the two leg portions are referred collectively to as "leg portion" unless the first leg portion 200 and the second leg portion 300 are separately indicated, and regarding the "leg portion", the reference numeral 2XX denotes the configuration of the first leg portion 200. It will be understood that the reference numeral 2XX as used herein indicates the first leg portion 200, and the reference numeral 3XX as used herein indicates the second leg portion 300.

The exoskeleton robot 10 will be described in more detail below.

The exoskeleton robot 10 according to this embodiment is attached to the lower limb of the user U to move the patient's lower limb for lower limb exercises.

The controller 3 is embedded in the body portion 100 of the exoskeleton robot 10, and controls the rotation of the hip joint portion, the knee joint portion and the ankle joint portion of the leg portion 200 of the exoskeleton robot 10 by operating the actuator according to the commands for operation entered into the input/output device 2.

The controller 3 may be a so-called computer, and the memory of the controller 3 stores data associated with the plurality of training modes for the user U. The processor of the controller 3 reads information of the data in the memory and operates the corresponding actuator.

When the user U or the assistant selects a training mode to be performed among the plurality of training modes through the input/output device, the controller 3 controls the rotation of the hip joint portion, the knee joint portion and the ankle joint portion of the exoskeleton robot 10 in response to the selected training mode to train the lower limb of the user U.

According to this embodiment, the plurality of training motions relate to motions related to the basic activities and poses of the lower limbs of normal persons with no lower limb paralysis, and the plurality of training modes include Stand up mode, Sit down mode, Walk forward mode, Walk in place mode and Climb/descend stairs mode.

The operation of the robot system 1 according to the training mode will be described in more detail below.

### [Exoskeleton robot (10)]

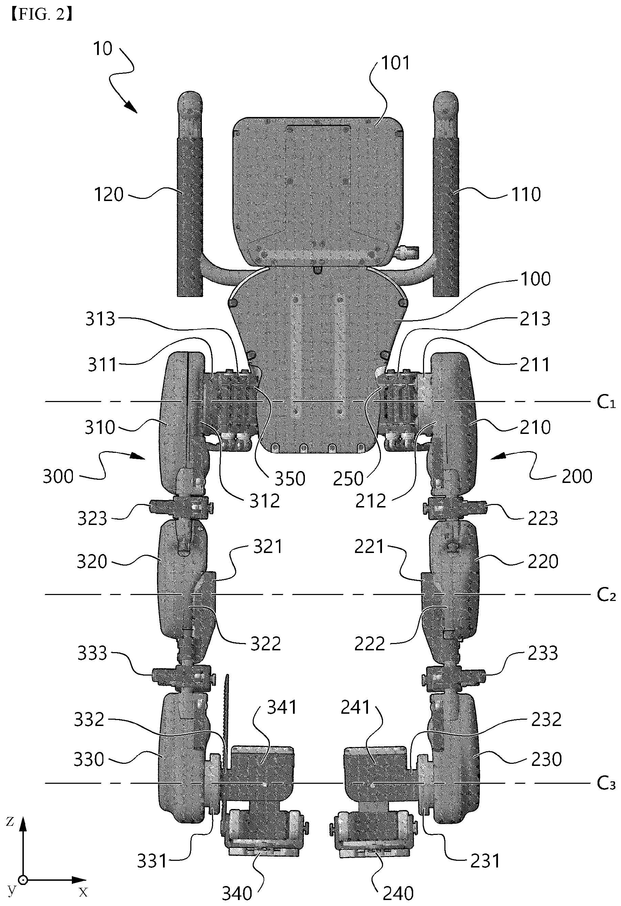

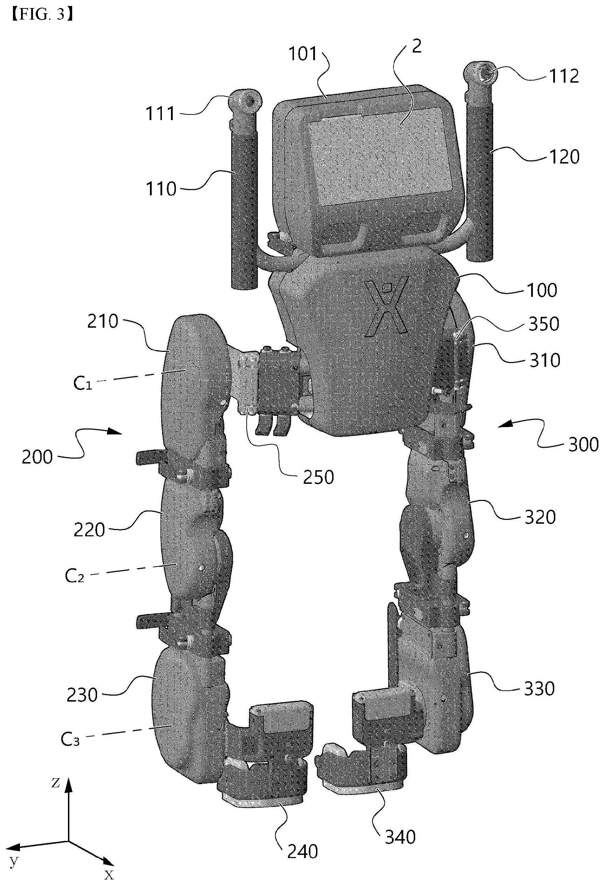

FIG. 2 is a front view of the exoskeleton robot 10 according to an embodiment, and FIG. 3 is a rear perspective view of the exoskeleton robot 10.

Referring to FIGS. 2 and 3, the body portion 100 is divided into an upper module 101 and a lower module 102.

The upper module 101 contacts approximately the back of the user U near the shoulder blade of the user U, and the lower module 102 contacts approximately the waist and pelvis of the user U.

The upper module 101 may be formed to move in the Z-axis direction relative to the lower module 102, and the height of the upper module 101 may be adjusted according to the body size of the user U.

A shoulder harness (not shown) may be fixed to the upper module 101 to secure the shoulders of the user U, and an abdominal harness (not shown) may be fixed to the lower module 102 to secure the waist and abdomen of the user U. The upper body of the user U is fixed to the body portion 100 by tightly holding the upper body of the user U using the shoulder harness and the abdominal harness.

As clearly shown in FIG. 3, the input/output device 2 may be detachably fixed to the rear side of the upper module 101. Accordingly, the assistant standing behind the exoskeleton robot 10 to assist the user U may enter the input commands into the input device 2 or visually see the output data. According to this embodiment, the exoskeleton robot 10 is formed in suitable size for a child, and the input/output device 2 is fixed to the upper module 101 with a display portion slightly tilted upward, making it convenient for the adult assistant to use the input/output device 2.

A battery is embedded in the lower module 102 to supply necessary power to the controller 3 and the robot system 1.

The lower module 102 includes handles 110, 120 on two upper sides and the assistant may grasp the handles 110, 120. The exoskeleton robot 10 operates in a state that the assistant holds the handles 110, 120, in order to prevent the exoskeleton robot 10 from falling.

The handles 110, 120 have buttons 111, 112 at the ends, respectively, to enter the commands into the controller 3. For example, the button formed in the first handle 110 is a function button 111 used to start or stop the operation of the exoskeleton robot 10, and the button formed in the second handle 120 is an emergency stop button 112 to stop the exoskeleton robot 10 in case of emergency.

The assistant may press the buttons 111, 112 with thumbs while holding the handles 110, 120.

A pelvic link 250 extends from the lower model 102 of the body portion 100 and bends toward the front side of the exoskeleton robot 10. One end of the pelvic link 250 is connected to the lower end portion of the lower module 102 of the body portion 100 through the hip joint portion 251. The pelvic link 250 is rotatable around a rotation center axis in the y-axis direction with respect to the hip joint portion 251 (see FIG. 1). The lower module 102 includes an actuator (not shown) to rotate the pelvic link 250 around the hip joint portion 251. The actuator may include a motor and a speed reducer. Furthermore, the actuator includes a sensor, for example, an encoder to detect the angle and speed of rotation of the motor.

As the pelvic link 250 rotates around the hip joint portion 251, the entire leg portion 200 may rotate around the rotation center axis in the y-axis direction (i.e., clockwise or counterclockwise when viewed from FIG. 2).

According to this embodiment, the pelvic link 250 is formed to extend and retract in length to adjust the distance between the two leg portions according to the pelvis size of the user U.

The other end of the pelvic link 250 is connected to one end of the hip joint module 210 through the hip joint portion 211. The hip joint module 210 is rotatable around a rotation center axis C1 in the x-axis direction with respect to the hip joint portion 211.

In this embodiment, the hip joint portion 251 is a joint portion having the rotation center axis in the y-axis direction, and the hip joint portion 211 is a joint portion having the rotation center axis in the x-axis direction. As described above, the joint portion corresponding to the hip joint of the user U is divided into the hip joint portions 251, 211 having the rotation center axes perpendicular to each other to allow the user U to move the hip joints in a natural way.

The hip joint module 210 includes an actuator 212 to rotate the hip joint module 210 about the hip joint portion 211. The actuator 212 may include a motor and a speed reducer. The actuator 212 includes a sensor, for example, an encoder to detect the angle and speed of rotation of the motor.

As the hip joint module 210 rotates about the hip joint portion 211, the entire leg portion 200 may rotate around the rotation center axis C1 in the x-axis direction.

A knee module 220 is coupled to the hip joint module 210. The knee module 220 is coupled movably closer to or away from the hip joint module 210.

An ankle module 230 is connected to the knee module 220 such that the knee joint portion 221 is rotatable around a rotation center axis C2.

Additionally, the ankle module 230 is coupled to the knee module 220 movably closer to or away from the knee module 220.

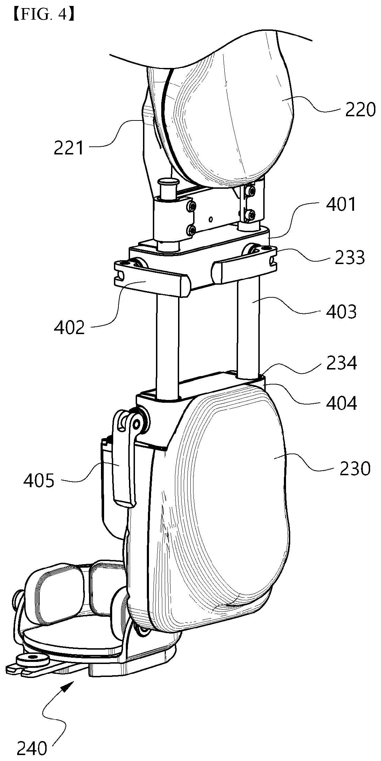

FIG. 4 is a diagram illustrating the distance adjustment of the knee module 220 and the ankle module 230.

As shown in FIG. 4, the ankle module 230 is connected to the knee module 220 with a connection bar 403. A locking device 234 fixed to the ankle module 230 is connected to the connection bar 403.

A clamping means is disposed inside a locking block 404 of the locking device 234 to clamp the connection bar 403. When the clamping means of the locking block 404 is loose by untightening a clamp 405 of the locking device 234, the ankle module 230 may be allowed to move along the connection bar 403. Accordingly, the distance between the knee module 220 and the ankle module 230 may be adjusted.

The distance adjustment of the knee module 220 and the ankle module 230 described with reference to FIG. 4 may be applied between the hip joint module 210 and the knee module 220 to adjust the distance between the hip joint module 210 and the knee module 220.

Referring back to FIGS. 2 and 3, the knee module 220 includes an actuator 222 to rotate the ankle module 230 about the knee joint portion 221. The actuator 222 may include a motor and a speed reducer. The actuator 222 includes a sensor, for example, an encoder to detect the angle and speed of rotation of the motor.

A footplate module 240 is connected to the ankle module 230 such that the ankle joint portion 231 is rotatable around a rotation center axis C3. The ankle module 230 includes an actuator 232 to rotate the footplate module 240 about the ankle joint 231. The actuator 232 may include a motor and a speed reducer. The actuator 232 includes a sensor, for example, an encoder to detect the angle and speed of rotation of the motor.

The footplate module 240 is where the user U rests his/her foot, and is rotatable around a rotation center axis 241 that extends in the y-axis direction. According to this embodiment, the rotation of the footplate module 240 around the rotation center axis 241 does not require the active operation of the actuator, and the angle of the footplate module 240 may be adjusted according to the body size of the user U or the joint angle of the painful ankle. After the footplate module 240 is adjusted to the optimal angle, the footplate module 240 is fixed using a locking means to prevent it from rotating around the rotation center axis 241.

As shown in FIGS. 2 and 3, the pelvic link 250 has a harness fixing portion 213 to fix a harness (not shown) that fastens the lower abdomen of the user U, a harness fixing portion 223 between the hip joint module 210 and the knee module 220 to fix a harness (not shown) that fastens the thigh of the user U, and a harness fixing portion 233 between the knee module 230 and the ankle module 230 to fix a harness (not shown) that fastens the calf of the user U. Additionally, a foot wear (not shown) may be coupled to the footplate module 240 to keep the foot of the user U secure.

As shown in FIG. 4, for example, the harness fixing portion 233 is disposed on the connection bar 403 connecting two modules, and is movable on the connection bar 403.

A clamping means is disposed inside a locking block 401 of the harness fixing portion 233 to clamp the connection bar 403. When the clamping means of the locking block 401 is loose by untightening a clamp 402, the harness fixing portion 233 may be allowed to move along the connection bar 403.

The way to move the harness fixing portion 233 may be equally applied to the harness fixing portion 223, and accordingly, the position of the harness fixing portion 223 may be adjusted between the hip joint module 210 and the knee module 220.

According to the above configuration, the distance between the hip joint module 210 and the knee module 220 and the position of the harness fixing portion 223 may be adjusted to fit the body size of the user U, and when the hip joint portion 211 is disposed at a location corresponding to the hip joint of the user U and the knee joint portion 221 is disposed at a location corresponding to the knee joint of the user U, the leg portion may be fastened to the thigh.

Furthermore, the distance between the knee module 220 and the ankle module 230 and the position of the harness fixing portion 233 may be adjusted to fit the body size of the user U, and when the ankle joint portion 231 is disposed at a location corresponding to the ankle joint of the user U, the leg portion may be fastened to the calf.

As described above, the exoskeleton robot 10 according to this embodiment may freely adjust the length or gap of the leg portion to fit the body size of the user U, thereby minimizing discomfort the user U feels when the user U is forced to move by the operation of the leg portion.

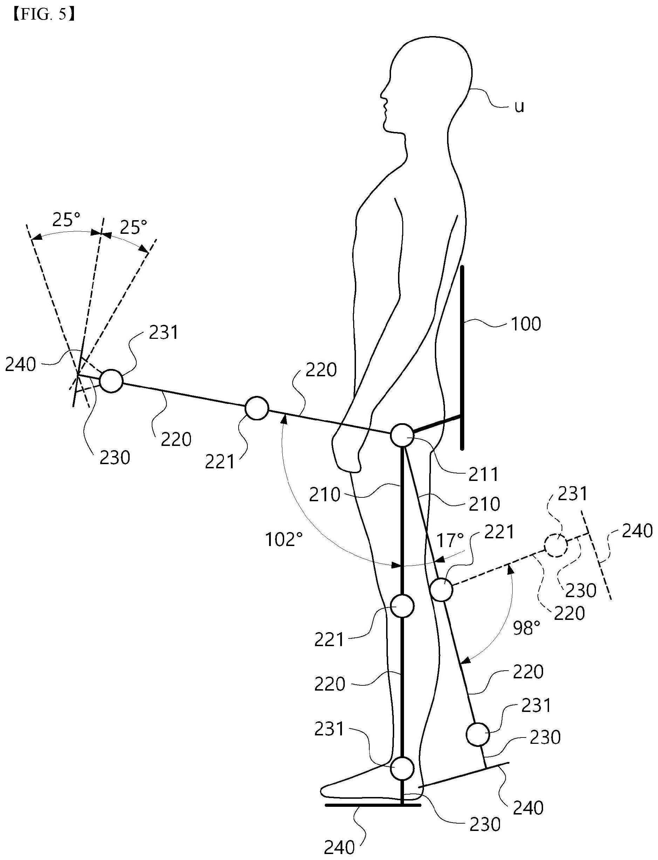

Furthermore, the exoskeleton robot 10 according to this embodiment has a range of motion that matches the lower limb range of motion in normal persons. FIG. 5 is a conceptual diagram showing the range of motion of the leg portion 100 of the exoskeleton robot 10.

Accordingly, the exoskeleton robot 10 may make a plurality of motions related to human lower limb motions.

### [Operation of robot system (1)]

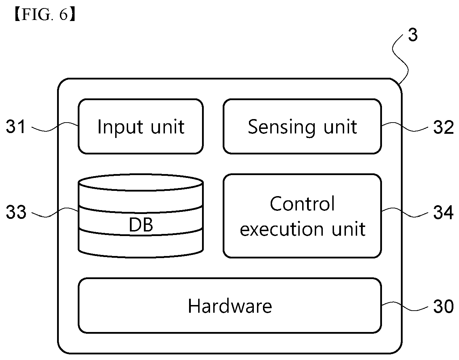

FIG. 6 is a schematic block diagram of the controller 3 of the lower limb rehabilitation training robot system according to an embodiment.

Referring to FIG. 6, the controller 3 of the lower limb rehabilitation training robot system according to an embodiment includes an input unit 31, a sensing unit 32 and a control execution unit 34. In an embodiment, the controller 3 further includes a database (DB) 33. Additionally, each component of the controller 3 may be executed using at least some of hardware 30 of the controller 3.

The hardware 30 may include a memory to store data, for example, parameters for the operation of the lower limb rehabilitation training robot system, and a processor to read the data in the memory to operate the corresponding actuator. For example, the hardware may be a data processing device including a central processing unit (CPU) or other processor. Additionally, software that runs by the hardware may refer to a process in progress, an object, an executable, a thread of execution or a program.

That is, each unit and the DB that make up the controller 3 may have aspects of hardware in whole, or hardware in part and software in part. For example, each unit of the controller may refer collectively to hardware and related software for processing data of a specific format and content or/or transmitting and receiving data via electronic communication. In this specification, the term "unit", "module", "device", "terminal", "server" or "system" is intended to refer to a combination of hardware and software that runs by the corresponding hardware.

Furthermore, each unit and the DB that make up the controller are not intended to refer to individual devices that are physically separated from each other. That is, each unit 31, 33, 34 and the DB 33 that make up the controller shown in FIG. 6 are functional divisions of the hardware for controlling the operation of the lower limb rehabilitation training robot system according to the operation performed by the corresponding hardware, and each unit or the DB is not necessarily independent from each other. According to embodiments, one or more of each unit and the DB may be individual devices that are physically separated from each other.

The DB 33 of the controller 3 stores parameter information for executing each training mode of the lower limb rehabilitation training robot system through the actuator. For example, the parameter information may include operating time corresponding to each of Stand up mode and Sit down mode, and knee bending angle corresponding to Sit down mode. Additionally, the parameter information may include operating (step) time, pause, step length and step height corresponding to Walk forward mode. Additionally, the parameter information may include operating (step) time, pause and step height corresponding to Walk in place mode. Further, the parameter information may include operating (step) time, step length, stair height, handle position, and ascending/descending direction corresponding to Climb/descend stairs mode.

In the parameter information, the operating time refers to the time the motion lasts in Stand up or Sit down mode, and in Walk forward, Walk in place and Climb/descend stairs modes, and refers to the time it takes to complete one cycle of walking motion (for example, including alternating left and right foot stepping in the case of two feet motion). Additionally, in the parameter information, the step length refers to the distance from one heel to the other heel while walking. Furthermore, in the parameter information, the pause refers to the time interval between steps. Further, in the parameter information, the step height refers to the distance between the foot and the ground when the foot is furthest away from the ground during the walking motion.

The input unit 31 of the controller 3 may receive, from the input/output device 2, selection information for selecting a training mode that the user (hereinafter, intended to include the patient and/or the assistant) wants to train.

When the training mode is selected, the control execution unit 34 loads parameter information corresponding to the selected training mode from the DB 33, and controls the rotation of the actuator disposed in at least one of the hip joint portion, the knee joint portion or the ankle joint portion of the exoskeleton robot based on the loaded parameter information, to allow the training motion corresponding to the loaded parameter by the operation of each joint portion.

In an embodiment, the exoskeleton device is configured to change the length of the leg portion of the exoskeleton device to fit the user by adjusting the distance between the hip joint and the knee and/or the distance between the knee and the ankle, and in this instance, the controller 3 may carry out fine tuning of the motion parameters of the lower limb rehabilitation training robot system based on the length of the leg portion of the exoskeleton device.

As described above with reference to FIGS. 2 to 4, the exoskeleton device may include the hip joint module 210 that rotates about the hip joint portion 211, the knee module 220 coupled to the hip joint module 210 movably closer to or away from the hip joint module 210, and the ankle module 230 coupled to the knee module 220 movably closer to or away from the knee module 220 so that the knee joint portion 221 is rotatable around the rotational center axis C2. The distance between the hip joint module 210 and the knee module 220, and the distance between the knee module 220 and the ankle module 230 may be adjusted through each module connected with the connection bar (for example, 403).

In this instance, the sensing unit 32 of the controller 3 may detect the distance between each module through a sensing member, for example, a sensor (not shown) at a connected part between the hip joint module 210 and the knee module 220 and/or between the knee module 220 and the ankle module 230. The sensor may be an element for electrically and/or optically detecting whether each module is close to or far from each other, or may include a mechanism coupled to the connection bar (for example, 403) connecting each module to determine the extent to which the connection bar retracts into each module or extends from each module.

In an embodiment, information that the sensing unit 32 detects may include first distance information between the hip joint module 210 and the knee module 220 and/or second distance information between the knee module 220 and the ankle module 230.

The control execution unit 34 may control the rotation of the hip joint portion, the knee joint portion and/or the ankle joint portion of the exoskeleton device based on preset parameter information corresponding to the training mode selected by the user, and may calculate the length of the leg portion of the exoskeleton device based on the distance information detected by the sensing unit 32, and carry out fine tuning of the upper limit and/or the lower limit of the parameter according to the length of the leg portion.

For example, the control execution unit 34 may calculate length information of the entire leg portion of the exoskeleton device based on the hip joint-knee distance (first distance information) and/or the knee-ankle distance (second distance information), and adaptively control the upper limit and/or the lower limit of the parameter related to the walking motion (for example, operating time, pause, step length, step height and/or stair height) among the parameter information based on the calculated length information.

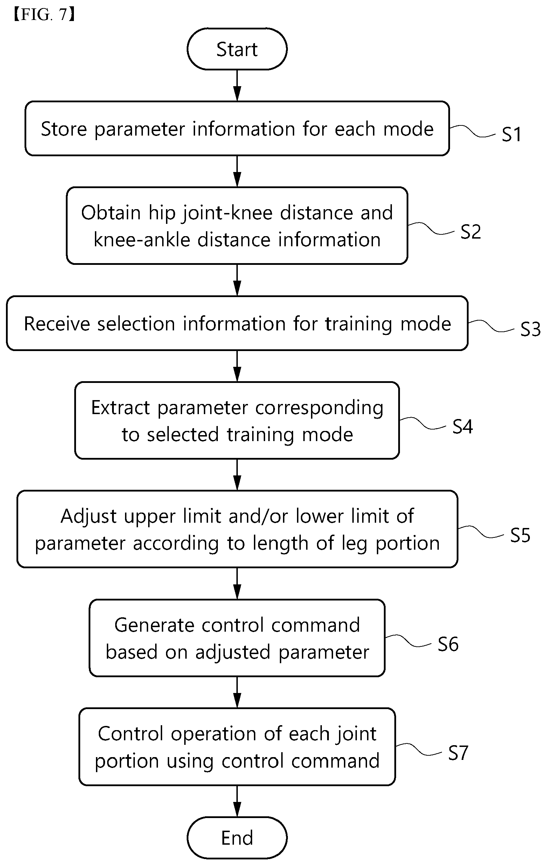

FIG. 7 is a flowchart showing each step of a control method of the lower limb rehabilitation training robot system according to an embodiment. For convenience of description, the control method of the lower limb rehabilitation training robot system according to this embodiment will be described with reference to FIGS. 6 and 7.

First, the controller 3 may store the parameter information corresponding to each training mode of the lower limb rehabilitation training robot system, for example, Stand up mode, Sit down mode, Walk forward mode, Walk in place mode and Climb/descend stairs mode in the DB 33 of the controller 3 (S1). The parameter information may include all or some of the operating (or step) time, the knee bending angle, the pause, the step length, the step height, the stair height setting value, the handle position and the ascending/descending direction according to the training mode.

When the user who wants to use the lower limb rehabilitation training robot system adjusts the length of the leg portion of the exoskeleton device to fit his/her body size, the controller 3 may obtain the hip joint-knee distance (i.e., the first distance information between the hip joint module 210 and the knee module 220) and/or the knee-ankle distance (i.e., the second distance information between the knee module 220 and the ankle module 230) through the sensor disposed in each module 210, 220, 230 or the connector (for example, the connection bar 403) between each module (S2).

Additionally, when the user who wants to use the lower limb rehabilitation training robot system selects the training mode, the controller 3 may receive the selection information for the training mode (S3), and extract and load the parameter information corresponding to the selected training mode from the parameter information stored in the DB 33 of the controller 3 (S4).

In this instance, the controller 3 may carry out fine tuning of the upper limit and/or the lower limit of the parameter corresponding to the training mode according to the length of the leg portion of the exoskeleton device calculated using the hip joint-knee distance and/or the knee-ankle distance (S5). The operation may be performed on all or some of the parameters set for the training mode.

For example, the controller 3 may be configured to divide the length of the leg portion of the exoskeleton device into a plurality of ranges, and in the case of a larger range of lengths of the leg portion, increase the upper limit of the step length, the step height and the stair height among the parameters. TABLE 1 below shows the numerical ranges of the finely tuned step length and step height parameters.

**[TABLE 1]**

| Length of leg portion of exoskeleton device (mm) | | 620 to 699 | 700 to 779 | 780 to 860 |
|---|---|---|---|---|
| Walk forward mode | Step length (cm) | 15 to 30 | 15 to 35 | 15 to 40 |
| | Step height (cm) | 5 to 15 | 5 to 17 | 5 to 20 |
| Walk in place mode | Step height (cm) | 5 to 15 | 5 to 17 | 5 to 20 |
| Climb/descend stairs mode | Step length (cm) | 15 to 30 | 15 to 35 | 15 to 40 |
| | Stair height (cm) | 5 to 10 | 5 to 12 | 5 to 15 |

The controller 3 may set the value of the step length parameter to 15 to 30 cm in each training mode of Walk forward mode, Walk in place mode or Climb/descend stairs mode, and adjust the upper limit of the step length parameter to 30 cm, 35 cm and 40 cm according to the length of the leg portion of the exoskeleton device in the ranges of (1) 620 to 699 mm, (2) 700 to 799 mm and (3) 780 to 860 mm, respectively.

The user may set the desired parameter within the parameter range corresponding to the selected training mode to use the lower limb rehabilitation robot system, and as the hip joint-knee distance and the knee-ankle distance increase, the length of the leg portion increases, and the upper limit of the parameter range that the user can set increases, so the user with longer legs may conduct rehabilitation training with larger step length.

Although the fine-tuning of the step length, the step height and the stair height among the walking-related parameters according to the length of the leg portion has been hereinabove described by way of example, those skilled in the art will easily understand that the same principle may be applied to other walking-related parameters such as step time and pause from the above description.

Although TABLE 1 shows the fine tuning of the parameter to increase the upper limit of the parameter that the user can set with the increasing length of the leg portion of the exoskeleton device, the fine tuning of the parameter may be done in such a way that the lower limit of the parameter decreases with the increasing or decreasing length of the leg portion.

When the fine tuning of the parameter for the operation of the lower limb rehabilitation training robot system is performed based on the length of the leg portion, the controller 3 may generate the control command for operating the hip joint portion, the knee joint portion and the ankle joint portion of the exoskeleton device based on the tuned parameter (S6).

Subsequently, the controller 3 may transmit the generated control command to the actuator (for example, the motor) of each joint portion to operate the connected link (module) at each joint portion to rotate at the number of revolutions and/or the angle of rotation for implementing the finely tuned parameter (S7).

The operation by the control method of the lower limb rehabilitation training robot system according to the above-described embodiments may be, at least in part, incorporated into a computer program and recorded on a computer-readable recording medium. The computer-readable recording medium that stores programs for performing the operation by the control method of the lower limb rehabilitation training robot system according to the embodiments includes any type of recording device that stores computer-readable data. Examples of computer-readable recording medium include ROM, RAM, CD-ROM, magnetic tape, floppy disk or optical data storage device. Additionally, the computer-readable recording medium may be distributed across computer systems connected via a network to store and execute computer-readable code in a distributed manner. Furthermore, the functional program, code and code segment for realizing this embodiment will be readily understood by persons having ordinary skill in the technical field to which this embodiment belongs.

Although the present disclosure has been hereinabove described with reference to the embodiments shown in the drawings, this is provided for illustration purposes and those skilled in the art will understand that a variety of modifications and variations may be made thereto. However, it should be understood that such modifications or changes fall within the technical scope of protection of the present disclosure. Accordingly, the true technical scope of protection of the present disclosure should be defined by the technical aspects set forth in the appended claims.

### [Industrial Applicability]

The lower limb rehabilitation training robot system according to the present disclosure and its control method may be properly used in the field of lower limb rehabilitation for patients or people with disabilities.

## Claims

1. A lower limb rehabilitation training robot system for helping a patient to do lower limb rehabilitation training by providing training modes for a plurality of motions related to activities of a lower limb, the lower limb rehabilitation training robot system comprising:
an input/output device configured to allow a user or an assistant to select a training mode to perform among the plurality of training modes;
an exoskeleton robot fastened to the lower limb of the patient to move the lower limb of the patient; and
a controller configured to control the operation of the exoskeleton robot,
wherein the exoskeleton robot includes a hip joint portion, a knee joint portion and an ankle joint portion disposed to match a hip joint, a knee joint and an ankle joint of the patient, and
wherein the controller controls the rotation of the hip joint portion, the knee joint portion and the ankle joint portion of the exoskeleton robot in response to the selected training mode through the input/output device to assist the patient in moving the lower limb.

2. The lower limb rehabilitation training robot system according to claim 1,
wherein the plurality of training modes include Stand up mode, Sit down mode, Walk forward mode, Walk in place mode and Climb/descend stairs mode.

3. The lower limb rehabilitation training robot system according to claim 2,
wherein when the Walk forward mode and the Walk in place mode are selected,
one of Step-by-step mode, Continuous mode and Active mode is selected, the Step-by-step mode in which the motion is done once for each operation command entered by the patient or the assistant, the Continuous mode in which the motion continues until a stop command is entered by the patient or the assistant, and the Active mode in which the exoskeleton robot operates in response to a force applied by the patient to a preset sensitivity.

4. The lower limb rehabilitation training robot system according to claim 2,
wherein when the Walk in place mode is selected,
one of Both legs mode, Left leg mode and Right leg mode is selected, the Both legs mode to cause the patient to make a walking-in-place motion by moving a left leg and a right leg in an alternating manner, the Left leg mode to cause the patient to make the walking-in-place motion on the left leg, and the Right leg mode to cause the patient to make the walking-in-place motion on the right leg.

5. The lower limb rehabilitation training robot system according to claim 1,
wherein the exoskeleton robot further includes:
a hip joint module that is rotatable about the hip joint portion;
a knee module coupled to the hip joint module movably closer to or away from the hip joint module; and
an ankle module connected to the knee module such that the knee joint portion is rotatable around a rotation center axis, the ankle module coupled movably closer to or away from the knee module.

6. The lower limb rehabilitation training robot system according to claim 5,
wherein the controller includes:
an input unit configured to receive selection information for any one of the plurality of training modes from the input/output device;
a database configured to store parameter information corresponding to each of the plurality of training modes, the parameter information including at least one of an operating time, a pause, a step length, a step height or a stair height;
a sensing unit configured to detect at least one of first distance information between the hip joint module and the knee module or second distance information between the knee module and the ankle module; and
a control execution unit configured to generate a control command for controlling the rotation of at least one of the hip joint portion, the knee joint portion or the ankle joint portion of the exoskeleton robot based on the parameter information corresponding to the selected training mode by the selection information, and
wherein the control execution unit is further configured to:
calculate length information of the exoskeleton robot based on at least one of the first distance information or the second distance information, and
determine a value of at least one of an upper limit or a lower limit of the operating time, the pause, the step length, the step height or the stair height of the parameter information based on the length information.

7. A control method of a lower limb rehabilitation training robot system, the lower limb rehabilitation training robot system including an exoskeleton robot fastened to a lower limb of a patient to move the lower limb of the patient, the exoskeleton robot including a hip joint portion, a knee joint portion and an ankle joint portion disposed to match a hip joint, a knee joint and an ankle joint of the patient; and a controller to control the operation of the exoskeleton robot, the control method of the lower limb rehabilitation training robot system comprising the steps of:
storing, by the controller, parameter information corresponding to each of a plurality of training modes related to activities of the lower limb in the lower limb rehabilitation training robot system, the parameter information including at least one of an operating time, a pause, a step length, a step height or a stair height;
receiving, by the controller, selection information for any one of the plurality of training modes; and
generating, by the controller, a control command for controlling the rotation of at least one of the hip joint portion, the knee joint portion or the ankle joint portion of the exoskeleton robot based on the parameter information corresponding to the selected training mode by the selection information,
wherein the step of generating the control command comprises the step of:
determining, by the controller, a value of at least one of an upper limit or a lower limit of the operating time, the pause, the step length, the step height or the stair height of the parameter information based on length information of the exoskeleton robot.

8. The control method of the lower limb rehabilitation training robot system according to claim 7,
wherein the exoskeleton robot further includes:
a hip joint module that is rotatable around the hip joint portion;
a knee module coupled to the hip joint module movably closer to or away from the hip joint module; and
an ankle module connected to the knee module such that the knee joint portion is rotatable around a rotation center axis, the ankle module coupled movably closer to or away from the knee module, and
wherein the step of generating the control command further comprises the steps of:
detecting, by the controller, at least one of first distance information between the hip joint module and the knee module or second distance information between the knee module and the ankle module, and
calculating, by the controller, the length information based on at least one of the first distance information or the second distance information.
